# EUROPEAN PATENT APPLICATION

(11) **EP 2 988 231 A1**
(43) Date of publication of application: **24.02.2016**
(21) Application number: 15181988.5
(22) Date of filing: 21.08.2015
(51) Int. Cl.: G06F 17/30

(54) **METHOD AND APPARATUS FOR PROVIDING SUMMARIZED CONTENT TO USERS**

(30) Priority: 21.08.2014 IN CH40882014; 17.08.2015 KR 20150115414
(71) Applicant: Samsung Electronics Co., Ltd., Gyeonggi-do 16677 (KR)
(72) Inventor: SATHISH, Sailesh, Bangalore (IN); PATANKAR, Anish, Bangalore (IN); NEEMA, Nirmesh, Near Narsing Bazar Indore (IN)
(74) Representative: Gover, Richard Paul

(57) **Abstract**

A method of displaying summarized content by an electronic device includes: performing a text analysis on first content accessed by a user to acquire a plurality of subject words; displaying the acquired plurality of subject words; and displaying second content corresponding to at least one of the acquired plurality of subject words based on an external input, wherein the second content is summarized content of the first content.

## Description

### CROSS-REFERENCE TO RELATED APPLICATIONS

This application claims priority from Indian Patent Application No. 4088/CHE/2014, filed on August 21, 2014 in the Indian Patent Office and Korean Patent Application No. 10-2015-0115414, filed on August 17, 2015 in the Korean Intellectual Property Office, the disclosures of which are incorporated herein in their entirety by reference.

### BACKGROUND

### 1. Field

Apparatuses and methods consistent with exemplary embodiments relate to providing summarized content to users.

### 2. Description of the Related Art

With the rapid advancement of information technology (IT) industry, the types of content exchanged over a communication network have been progressively diversified, and users' dependence on the Internet has grown. However, as the amount of web content accessible by users increases, it is required to develop technology to efficiently provide content which is necessary for or is preferred by users.

Particularly, as research on smartphones or wearable devices is actively in progress, research for providing content suitable for those devices is also in progress. Generally, readability of webpages originally suitable for a desktop environment is reduced at a mobile device whose a screen size is small. Therefore, online service providers separately create webpages suitable for the mobile environment and provide the created webpages to users. However, the online service providers expend extra cost and effort for separately creating the webpages suitable for the mobile environment.

As the amount of web content accessible by users increases, there is a need for a method and an apparatus that summarize content so that users can be provided with content necessary for or preferred by them.

The related art method of providing summarized content is performed with reference to metadata or a tag corresponding to words, phrases, sentences, paragraphs, and/or the like included in the content. For example, when content is a live commentary on baseball, a commentary representing a situation such as score, homerun, and/or the like is separately tagged, and only the tagged commentary is extracted and provided to users.

However, the relate art method causes inconvenience to a content provider that a commentary is to be previously tagged.

### SUMMARY

Exemplary embodiments address at least the above problems and/or disadvantages and other disadvantages not described above. Also, the exemplary embodiments are not required to overcome the disadvantages described above, and may not overcome any of the problems described above.

One or more exemplary embodiments provide a method and an apparatus that provide summarized content to users.

Provided are a method and apparatus for providing summarized content to users, without separate authoring by a service provider.

Provided are a method and apparatus for efficiently providing content which is necessary for or is preferred by users.

According to an aspect of an exemplary embodiment, there is provided a method of displaying, by an electronic device, summarized content including: performing a text analysis on first content accessed by a user to acquire a plurality of subject words; displaying the acquired plurality of subject words; and displaying second content corresponding to at least one of the acquired plurality of subject words based on an external input, wherein the second content is summarized content of the first content.

The text analysis may be a semantic analysis.

The first content may include the plurality of subject words, and the plurality of subject words may be extracted from the first content by performing the semantic analysis based on unsupervised extraction, and are displayed.

The at least one subject word may be selected based on ontology that defines a hierarchical relationship between the plurality of subject words, and may be at a same level in the hierarchical relationship.

The semantic analysis may be performed based on the ontology.

The method may further include determining a level in the hierarchical relationship, based on the external input, wherein the selected at least one subject word may have the determined level.

The external input may be a pinch-in input or a pinch-out input, and the level may be determined based on a extent of the pinch-in input or pinch-out input.

The method may further include extracting, from the first content, a plurality of content pieces corresponding to the plurality of subject words, wherein the displayed second content may be extracted from among the plurality of content pieces.

The first content may be web-based content, and the second content may be displayed through a notification message while the first content is being updated.

According to an aspect of another exemplary embodiment, there is provided an electronic device for displaying summarized content including: a controller configured to perform a text analysis on first content accessed by a user to acquire a plurality of subject words; and a display configured to display the acquired plurality of subject words and display second content corresponding to at least one of the acquired plurality of subject words based on an external input, wherein the second content is summarized content of the first content.

The text analysis may be a semantic analysis.

The controller may extract, from the first content, a plurality of content pieces corresponding to the plurality of subject words, and the displayed second content may be extracted from among the plurality of content pieces.
The first content may be web-based content, and the second content may be displayed through a notification message while the first content is being updated.

According to an aspect of another exemplary embodiment, there is provided a non-transitory computer-readable storage medium storing a program that is executable by a computer to perform the method.

According to an aspect of another exemplary embodiment, there is provided a method of providing summarized content to a terminal device by a server, the method comprising: performing a text analysis on first content in response to a text analysis request for the first content accessed by the terminal device; transmitting, to the terminal device, information of a plurality of subject words which are acquired based on the text analysis; receiving, from the terminal device, information corresponding to at least one subject word of the plurality of subject words; and transmitting information of second content corresponding to the at least one subject word to the terminal device, wherein the second content is summarized content of the first content.

The text analysis may be a semantic analysis.

The first content may include the plurality of subject words, and the plurality of subject words may be extracted from the first content by performing the semantic analysis based on unsupervised extraction, and are displayed.

The at least one subject word may be selected based on ontology that defines a hierarchical relationship between the plurality of subject words, and may be at a same level in the hierarchical relationship.

The semantic analysis may be performed based on the ontology.

The method may further include receiving information about a level of the selected at least one subject word in the hierarchical relationship.

The method may further include: extracting, from the first content, a plurality of content pieces corresponding to the plurality of subject words; and transmitting information of the plurality of content pieces to the terminal device.

The first content may be web-based content, and the information of the second content may be transmitted to the terminal device through a notification message while the first content is being updated.

The terminal device may be a first terminal device, and the transmitting the information of the second content may include transmitting the information of the second content to a second terminal device.

According to an aspect of another exemplary embodiment, there is provided a server for providing summarized content to a terminal device, the sever comprising: a controller configured to perform a text analysis on first content in response to a text analysis request for the first content accessed in the terminal device; and a communicator configured to transmit, to the terminal device, information of a plurality of subject words which are acquired based on the text analysis, receive, from the terminal device, information corresponding to at least one subject word of the plurality of subject words, and transmit information of second content, corresponding to the at least one subject word, wherein the second content is summarized content of the first content

The text analysis may be a semantic analysis.

The controller may extract, from the first content, a plurality of content pieces corresponding to the plurality of subject words, and the communicator may transmit information of the plurality of content pieces to the terminal device.

The first content may be web-based content, and the information of the second content may be transmitted to the terminal device through a notification message while the first content is being updated.

The terminal device may be a first terminal device, and the communicator may transmit the information of the second content to a second terminal device.
According to an aspect of another exemplary embodiment, there is provided is a non-transitory computer-readable storage medium storing a program that is executable by a computer to perform the method.BRIEF DESCRIPTION OF THE

### DRAWINGS

The above and/or other aspects will be more apparent by describing certain exemplary embodiments, with reference to the accompanying drawings in which:
FIG. 1 is a diagram illustrating an example of summarized content, according to an exemplary embodiment;
FIGS. 2 and 3 are block diagrams of a user device according to an exemplary embodiment;
FIG. 4 is a flowchart of a method of displaying, by a user device, summarized content, according to an exemplary embodiment;
FIG. 5 is a diagram for describing an example of summarizing content based on unsupervised extraction, according to an exemplary embodiment;
FIG. 6 is a diagram for describing an example of summarizing content based on ontology, according to an exemplary embodiment;
FIG. 7 is a diagram for describing an example of summarizing content based on ontology, according to another exemplary embodiment;
FIGS. 8A and 8B are diagrams for describing an example of providing, by a server, summarized content to a user device, according to an exemplary embodiment;
FIG. 9 is a flowchart of a method of providing, by a server, summarized content to a user device, according to an exemplary embodiment;
FIG. 10 is a diagram for describing an example of providing, by a server 300, second content summarized from first content accessed in a first device 100a to a second device 100b, according to an exemplary embodiment; and
FIGS. 11 and 12 are block diagrams of a server according to an exemplary embodiment.

### DETAILED DESCRIPTION

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

As used herein, the term "and/or" includes any and all combinations of one or more of the associated listed items. Expressions such as "at least one of," when preceding a list of elements, modify the entire list of elements and do not modify the individual elements of the list.

As used herein, the singular forms 'a', 'an' and 'the' are intended to include the plural forms as well, unless the context clearly indicates otherwise. It will be further understood that the terms 'comprise' and/or 'comprising,' when used in this specification, specify the presence of stated features, integers, steps, operations, elements, and/or components, but do not preclude the presence or addition of one or more other features, integers, steps, operations, elements, components, and/or groups thereof. In particular, the numbers mentioned in the present disclosure are merely examples provided to help understanding of the exemplary embodiments set forth herein and thus the exemplary embodiments are not limited thereto.

In the present disclosure, the term such as 'unit', 'module', etc. should be understood as a unit in which at least one function or operation is processed and may be embodied as hardware, software, or a combination of hardware and software.

It will be understood that, although the terms 'first', 'second', 'third', etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the exemplary embodiments.

The terminology used in the present disclosure will now be briefly described before exemplary embodiments are described in detail.

In the present disclosure, the term 'electronic device' should be understood to include smartphones, tablet computers, mobile phones, personal digital assistants (PDAs), media players, portable multimedia players (PMPs), e-book terminals, digital broadcasting terminals, electronic bulletin boards, personal computers (PCs), laptop computers, micro-servers, global positioning system (GPS) devices, navigation devices, kiosks, MP3 players, analog televisions (TVs), digital TVs, three-dimensional (3D) TV, smart TVs, light-emitting diode (LED) TVs, organic light-emitting diode (OLED) TVs, plasma TVs, monitors, curved TVs including screen having a fixed curvature, flexible TVs including screen having a fixed curvature, bended TVs including screen having a fixed curvature, curvature-variable TVs where a curvature of a current screen is adjustable according to a received user input, digital cameras, wearable devices and other mobile devices capable of being worn on a body of a user, non-mobile computing devices, and/or the like, but is not limited thereto.

In the present disclosure, the term 'wearable device' should be understood to include watches, bracelets, rings, glasses, and hair bands having a communication function and a data processing function but is not limited thereto.

Content described herein may be data that is created in an electronic form by an information processing system and transmitted, received, or stored, and may be distributed or shared in the electronic form over a network or the like. The content may be created as web-based content, and web-based content may be displayed to a user through the Internet web browser or the like. For example, the web-based content may be text, a figure, a table, a photograph, a video, or the like included in a webpage displayed through a web browser, or may be a webpage itself.

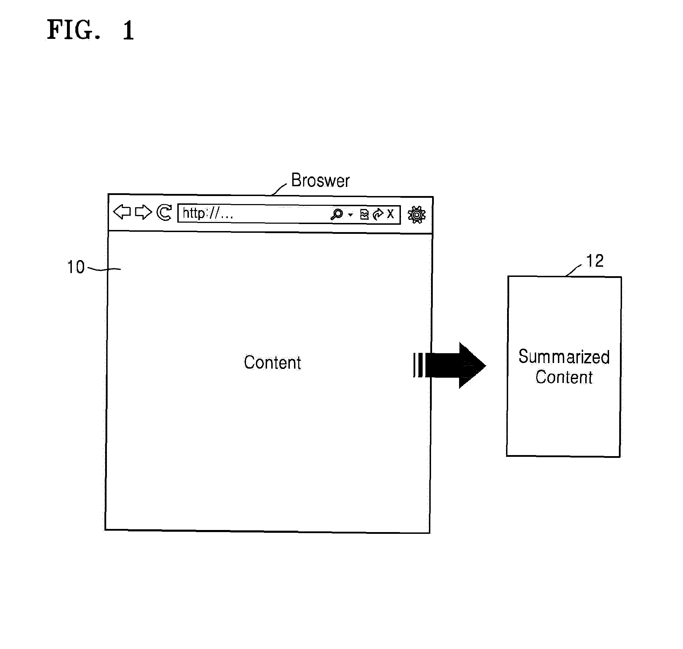

FIG. 1 is a diagram illustrating an example of summarized content, according to an exemplary embodiment.

A content providing apparatus according to an exemplary embodiment may summarize content 10 and may display summarized content 12 to a user. Here, the content providing apparatus may be an electronic device, and as illustrated in FIG. 1, the content 10 created as web-based content may be displayed through a browser.

The summarized content 12 may include a portion of the content 10. Here, the summarized content 12 may include a portion of the content 10 extracted from the content 10 based on criteria set by default or a user input.

The content providing apparatus may function as a server and provide summarized content to a user. For example, the content providing apparatus may be a first server that directly provides content to a user, or may be a second server that intermediates between the first server and the user.

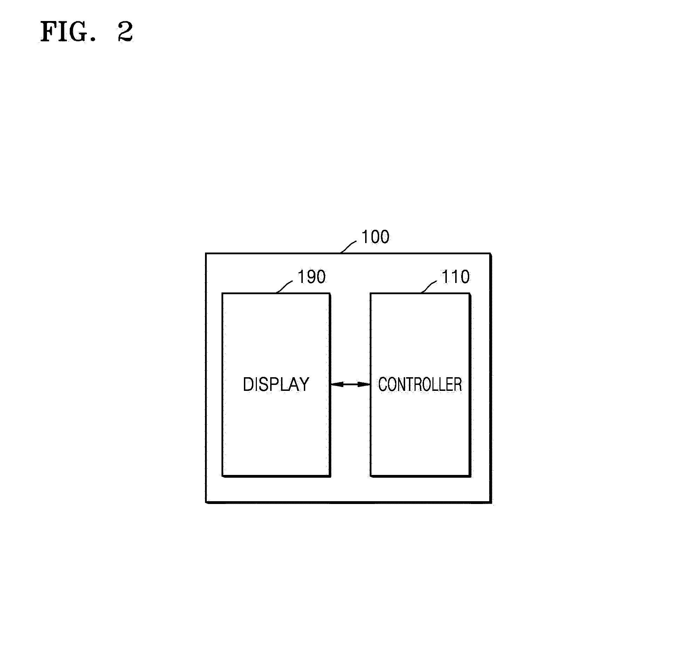

A method by which the content providing apparatus functions as a user device and displays summarized content to a user will be described with reference to FIGS. 2 to 7, for convenience of a description. Implementation of exemplary embodiments described with reference to the drawings is not limited to a case where the content providing apparatus functions as a user device, and the exemplary embodiments may be also implemented when the content providing apparatus functions as a server.

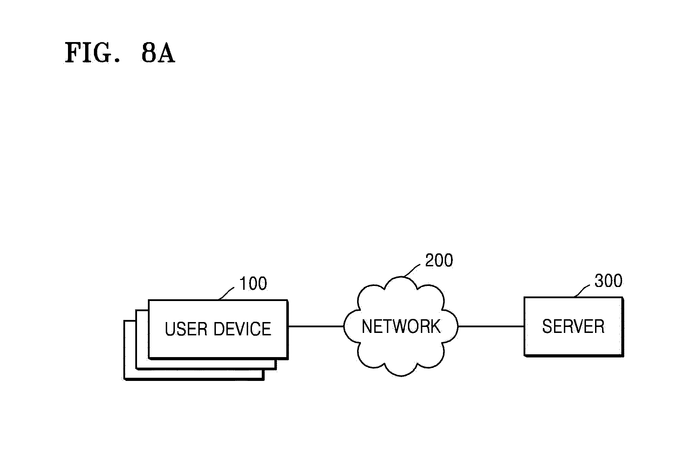

A method by which the content providing apparatus functions as a server and displays summarized content to a user will be described with reference to FIGS. 8A to 12. Implementation of exemplary embodiments described with reference to the drawings is not limited to a case where the content providing apparatus functions as a server, and the exemplary embodiments may be also implemented when the content providing apparatus functions as a user device.

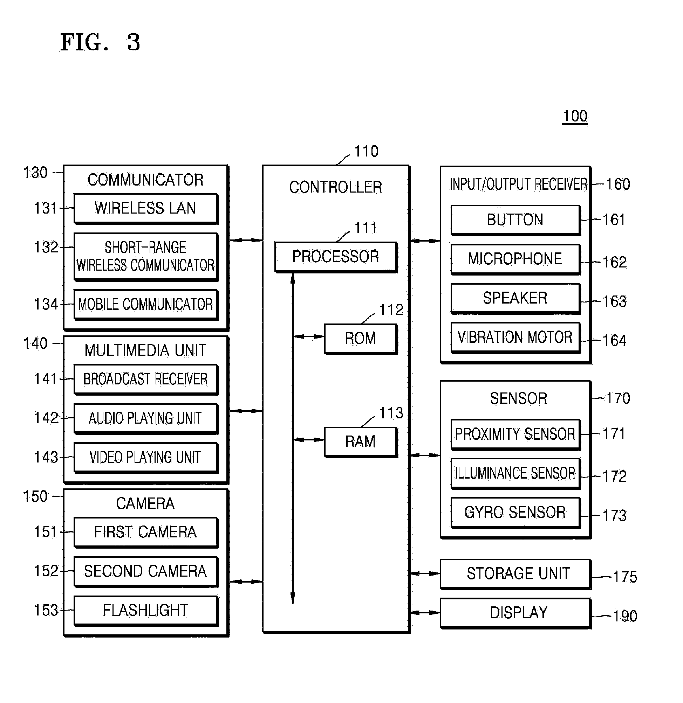

FIGS. 2 and 3 are block diagrams of a user device 100 according to an exemplary embodiment.

The content providing apparatus 100 may function as the user device 100 and display summarized content to a user.

Referring to FIG. 2, the user device 100 may include a controller 110 and a display 190.

The controller 110 may perform functions of the user device 100 by controlling overall operations of the user device 100.

The controller 110 may perform a text analysis on first content accessed by a user to acquire a plurality of subject words.

In an exemplary embodiment, the text analysis may include a semantic analysis. The word frequency of words included in the text of the first content, word similarity between the words, word correlation between the words, and/or the like may be checked through the semantic analysis. A word, of high frequency among the words, or representing similar words may be acquired as a subject word.

In an exemplary embodiment, the semantic analysis may be performed based on unsupervised extraction. In an exemplary embodiment, the semantic analysis may be performed based on ontology. As a result of the text analysis, the controller 110 may acquire the plurality of subject words.

The subject words may be text included in the first content, but are not limited thereto. The subject words may include a topic, an event, a subject, a word vector, a token, context information, and/or the like which are associated with the first content.

Information processed in the user device 100 may be displayed through the display 190.

The display 190 may display the acquired plurality of subject words, and display second content corresponding to at least one of the acquired plurality of subject words based on an external input.

In an exemplary embodiment, the second content may be summarized content of the first content, and include a portion of the first content. The second content may include a portion extracted from the first content based on criteria set by a default or a user input.

In an exemplary embodiment, the external input may be an input that selects the at least one subject word from among the plurality of subject words displayed through the display 190. The display 190 may display the second content corresponding to the selected at least one subject word.

In an exemplary embodiment, the at least one subject word corresponding to the second content may be selected based on a hierarchical relationship between the plurality of subject words. Here, the selected at least one subject word may be at the same level in the hierarchical relationship. Furthermore, a level in the hierarchical relationship may be determined based on an external input, and at least one subject word having the determined level may be selected.

In an exemplary embodiment, the controller 110 may acquire a plurality of the second content respectively corresponding to the acquired plurality of subject words. Here, the plurality of second content may be acquired from the first content. For example, a phrase, a sentence, a paragraph, a table, and/or the like which include each of the acquired plurality of subject words in the first content may be acquired as the second content.

According to an exemplary embodiment, a user may be provided with summarized content even without a separate operation (e.g., authoring) performed by a service provider or the user.

In an exemplary embodiment, the first content may be web-based content, and the second content may be displayed through a notification window while the first content is being updated. Here, the first content may include streaming content or dynamic content. The controller 110 may buffer the first content based on a predetermined window size, and subject words may be acquired from the first content buffered to the predetermined windows size. Therefore, a user may be provided with summarized content through a notification message or a notification window.

The user device 100 may be implemented with less elements than the number of the elements illustrated in FIG. 2, or may be implemented with more elements than the number of the elements illustrated in FIG. 2. For example, as illustrated in FIG. 3, the user device 100 according to an exemplary embodiment may further include a communicator 130, a multimedia unit 140, a camera 150, an input/output receiver 160, a sensor 170, and a storage unit 175, in addition to the above-described controller 110 and display 190.

Hereinafter, the elements of the user device 100 will be described in detail.

The controller 110 may control overall operations of the user device 100. For example, the controller 110 may execute programs stored in the storage unit 175 to control the communicator 130, the multimedia unit 140, the camera 150, the input/output receiver 160, the sensor 170, the storage unit 175, and the display 190.

The controller 190 may include a processor 111. The controller 110 may include a read-only memory (ROM) 112 that stores a computer program executable by the processor 111 to control the user device 100. Also, the controller 110 may store a signal or data inputted from the outside (e.g., a server 300) of the user device 100 or may include a random access memory (RAM) 113 that is used as a storage area for various operations performed by the user device 100.

The processor 111 may include a graphic processing unit (GPU) to process graphic images. The processor 111 may be implemented in a system-on chip (SoC) type that includes a core and the GPU. The processor 111 may correspond to a single-core, a dual-core, a triple-core, a quad-core, or a multiple-core processor. Also, the processor 111, the ROM 112, and the RAM 113 may be connected to each other through a bus.

The user device 100 may communicate with an external device (e.g., the server 300) through the communicator 130.

The communicator 130 may include at least one of a wireless LAN 131, a short-range wireless communicator 132, and a mobile communicator 134. For example, the communicator 130 may include one of the wireless LAN 131, the short-range wireless communicator 132, and the mobile communicator 134, or may include a combination thereof.

The user device 100 may be wirelessly connected to an access point (AP) through the wireless LAN 131 at a place where the AP is installed. The wireless LAN 131 may include, for example, Wi-Fi. The wireless LAN 131 may support IEEE 802.11 x. The short-range wireless communicator 132 may wirelessly perform short-range communication with an external device according to control by the controller 110 without the AP.

The short-range wireless communicator 132 may include a Bluetooth communicator, a Bluetooth low-energy (BLE) communicator, a near-field communication (NFC) unit, a Wi-Fi communicator, a Zigbee communicator, an infrared data association (IrDA) communicator, a Wi-Fi Direct (WFD) communicator, a ultra wideband (UWB) communicator, an Ant+ communicator, and/or the like, but is not limited thereto.

The mobile communicator 134 may transmit or receive a radio signal to or from at least one from among a base station, an external terminal, and the server 300 via a mobile communication network. The mobile communicator 134 may transmit or receive the radio signal, which is used to perform voice call, video call, short message service (SMS), multimedia message (MMS), and data communication, to or from a mobile phone, a smartphone, a tablet PC, and/or the like having a contactable phone number. Here, the radio signal may include various types of data generated when a voice call signal, a video call signal, or a text/multimedia message is transmitted or received.

The multimedia unit 140 may include a broadcast receiver 141, an audio playing unit 142, or a video playing unit 143. The broadcast receiver 141 may receive, through an antenna, a broadcasting signal (e.g., a TV broadcasting signal, a radio broadcasting signal, or a data broadcasting signal) and additional broadcasting information (e.g., electronic program guide (EPS) or electronic service guide (ESG)) transmitted from a broadcasting station according to control by the controller 110. Also, the controller 110 may control the audio playing unit 142 and the video playing unit 143 to decode the received broadcasting signal and additional broadcasting information by using a video codec and an audio codec.

The audio playing unit 142 may play, by using the audio codec, audio data stored in the storage unit 175 or received from an external device. For example, the audio data may be an audio file having a file extension of mp3, wma, ogg, or wav.

The audio playing unit 142 may play, by using the audio codec , acoustic feedback corresponding to an input received through the input/output receiver 160. For example, the acoustic feedback may be an output of the audio source stored in the storage unit 175.

The video playing unit 143 may play, by using the video codec video data stored in the storage unit 175 or received from an external device. For example, the video data may be a video file having a file extension of mpeg, mpg, mp4, avi, mov, or mkv. An application executed in the user device 100 may play the audio data or the video data by using the audio codec and/or the video codec. Also, a multimedia application executed in the user device 100 may play the video data by using a hardware codec and/or a software codec.

It may be easily understood by one of ordinary skill in the art that various types of video codecs and audio codecs may be used to play audio/video files having various file extensions.

A still image or a video may be photographed by the camera 150. The camera 150 may obtain an image frame of the still image or the video by using an image sensor. The image frame photographed by the image sensor may be processed by the controller 110 or a separate image processor. The processed image frame may be stored in the storage 175 or may be transmitted to an external device through the communicator 130.

The camera 150 may include a first camera 151 and a second camera 152 which are located at different positions in the user device 100. For example, the first camera 151 may be located on a front surface of the user device 100, and the second camera 152 may be located on a rear surface of the user device 100. For example, the first camera 151 and the second camera 152 may be located adjacent to each other on one surface of the user device 100. For example, when the first camera 151 and the second camera 152 are located adjacent to each other on the one surface of the user device 100, a 3D still image or a 3D video may be photographed by using the first camera 151 and the second camera 152. The camera 150 may further include a number of cameras in addition to first camera 151 and the second camera 152.

The camera 150 may include a flashlight 153 that provides an amount of light necessary for photographing. Also, the camera 150 may further include an additional lens, which is detachably attached to a separate adaptor, for a wide angle photograph, telephoto photograph, and/or close-up photograph.

Data may be inputted to the user device 100 through the input/output receiver 160, and data processed by the user device 100 may be outputted through the input/output receiver 160.

The input/output receiver 160 may include at least one of a button 161, a microphone 162, a speaker 163, and a vibration motor 164, but is not limited thereto. In other exemplary embodiments, the input/output receiver 160 may include various input/output devices.

The button 161 may be located on a front surface, a rear surface, or a side surface of the user device 100. For example, the button 161 may be a home button, a menu button, a return button, and/or the like located on a lower portion of the front surface of the user device 100. The button 161 may be a lock button, a volume button, and/or the like located on the side surface of the user device 100.

The button 161 may be implemented as touch buttons located on a bezel on the exterior of a touch screen.

When the user device 100 is a smartwatch, the button 161 may be a crown of the smartwatch.

An electrical signal may be generated based on a sound signal which is inputted through the microphone 162 from the outside of the user device 100. The electrical signal generated by the microphone 162 may be converted by the audio codec to be stored in the storage unit 175 or to be outputted through the speaker 163. The microphone 162 may be located at any position such as the front surface, the side surface, the rear surface, or the like of the user device 100. The user device 100 may include a plurality of microphones. Various noise removal algorithms for removing noise occurring while an external sound signal is being received may be used.

A sound corresponding to various signals (e.g., a radio signal, a broadcasting signal, an audio source, a video file, photographing, and/or the like) received by the communicator 130, the multimedia unit 140, the camera 150, the input/output receiver 160, or the sensor 170 and an audio source or a video source stored in the storage unit 175, may be outputted through the speaker 163.

The speaker 163 may output a sound (e.g., a touch sound corresponding to a phone number input or a photographing button sound) corresponding to a function performed by the user device 100. The speaker 163 may be located at any position such as the front surface, the side surface, the rear surface, or the like of the user device 100. The user device 100 may include a plurality of speakers.

The vibration motor 164 may convert an electrical signal into a mechanical vibration. The vibration motor 164 may include a linear vibration motor, a bar type vibration motor, a coin type vibration motor, or a piezoelectric vibration motor. The vibration motor 164 may generate a vibration corresponding to an output of an audio source or a video source. The vibration motor 164 may generate a vibration corresponding to various signals received by the communicator 130, the multimedia unit 140, the camera 150, the input/output receiver 160, or the sensor 170.

The vibration motor 164 may vibrate the whole user device 100 or may vibrate a portion of the user device 100. The user device 100 may include a plurality of vibration motors.

The input/output receiver 160 may further include a touch pad, a connector, a keypad, a jog wheel, a jog switch, an input pen, and/or the like.

The touch pad may be implemented in a capacitive type, a resistive type, an infrared sensing type, an acoustic wave conductive type, an integration tension measurement type, a piezo effect type, an electromagnetic resonance (EMR)) type, or the like. The touch pad may configure a layer structure along with the display 190, or may be directly located in the display 190 itself, thereby implementing a touch screen.

The touch pad may detect a proximity touch as well as a real touch. In the present specification, for convenience of a description, both of the real touch and the proximity touch may be referred to as a touch.

The real touch denotes an input that is made when a pointer physically touches the touch pad, and the proximity touch denotes an input that is made when the pointer does not physically touch the screen but approaches a position apart from the screen by a certain distance.

The pointer denotes a touch instrument for real touch or proximity-touch on the touch pad. Examples of the pointer include a stylus pen, a finger, etc.

The user device 100 may further include a tactile sensor or a force touch sensor which is located inside or near the touch pad, for more precisely sensing a touch inputted. Various pieces of information such as a roughness of a touched surface, a stiffness of a touched object, a temperature of a touched point, etc. may be sensed by using the tactile sensor.

The pressure of a touch exerted on the touch pad may be sensed and measured by the force touch sensor. According to the pressure, different functions may be performed in the user device 100 so that a variety of gesture inputs may be embodied.

A gesture input may be implemented in various types. For example, a tap may be applied when a pointer touches the touch pad once and then separates from the touch pan, a double tap may be applied by touching the touch pad twice within a certain time, and a multiple tap may be applied by touching the touch pad three times or more within a certain time. A long tap may be applied by maintaining the pointer touched on the touch pad for a certain time or more or until a certain event occurs.

A drag may be applied when a pointer moves from one position from another position of the touch pad while maintaining the pointer touched on the touch pad. A swipe may denote an input whose a moving speed of a pointer is relatively faster than a drag.

Pinch-out may be applied by moving two fingers from an inner side to an outer side on the touch pad, and pinch-in may be applied by moving two fingers from an outer side to an inner side like pinching.

A connector may be used as an interface for the user device 100 and a power source connected each other. The user device 100 may, according to control by the controller 110, transmit data stored in the storage 175 to the outside or receive data from the outside through a cable connected to the connector. Power may be applied to the user device 100 through the cable connected to the connector, and a battery of the user device 100 may be charged with the power. Also, the user device 100 may be connected to an external accessory (for example, a speaker, a keyboard dock, and/or the like) through the connector.

A key input may be received from a user through a keypad. Examples of the keypad may include a virtual keypad displayed on a touch screen, a physical keypad which is connectable by wire or wirelessly, a physical keypad that is located on the front surface of the user device 100, and/or the like.

The sensor 170 may include at least one sensor for detecting a state of the user device 100. For example, the sensor 170 may include a proximity sensor 171 that detects whether an object approaches to the user device 100, an illuminance sensor 172 that detects the amount of ambient light, and a gyro sensor 173 that measures an angular speed with respect to each of the X axis, the Y axis, and the Z axis to measure a changed angle, but is not limited thereto.

The sensor 170 may further include a GPS for detecting a position of the user device 100. In an outdoor place, a position of the user device 100 may be calculated by the GPS.

In an indoor place, a position of the user device 100 may be calculated by a wireless AP. In an indoor place, a position of the user device 100 may be calculated by a cell-ID method using an identifier (ID) of a wireless AP, an enhanced cell-ID method using the ID of the wireless AP and received signal strength (RSS), an angle of arrival (AoA) method using an angle at which a signal transmitted from an AP is received by the user device 100, and/or the like. The position of the user device 100 may be calculated by a wireless beacon.

The sensor 170 may include a magnetic sensor that detects azimuth by using an earth's magnetic field, an acceleration sensor that measures an angular speed (an acceleration of gravity and an acceleration of a motion) with respect to each of the X axis, the Y axis, and the Z axis, a gravity sensor that detects a direction where gravity acts, an RGB sensor that measures a concentration of red, green, blue, and white (RGBW) of lights, a hall sensor that senses a magnetic field, a magnetometer that measures an intensity of a magnetic field, an infrared (IR) sensor that senses a motion of a user's hands by using IR light, an altimeter that recognizes a gradient and measures atmospheric pressure to detect an elevation, a finger scan sensor, a heart rate sensor, a pressure sensor, ultraviolet (UV) sensor, a temperature humidity sensor, or a motion recognition sensor that recognizes a movement of a position of an object.

The storage unit 175 may store various types of data and control programs for controlling the user device 100 according to control by the controller 110. The storage unit 175 may store a signal or data inputted/outputted and corresponded to controlling of the communicator 130, the input/output receiver 160, and the display 190. For example, the storage unit 175 may store a graphic user interface (GUI) associated with control programs for controlling the user device 100 and an application which is provided from a manufacturer or is downloaded from the outside, images for providing the GUI, user information, documents, databases, relevant data, and/or the like.

The storage unit 175 may include a non-volatile memory, a volatile memory, a hard disk drive (HDD), a solid state drive (SSD), and/or the like. The storage unit 175 may be referred to as a memory.

The display 190 may include a plurality of pixels, and information processed by the user device 100 may be displayed through the plurality of pixels. For example, an execution screen of an operating system (OS) driven by the user device 100, an execution screen of an application driven by the OS, and/or the like may be displayed on the display 190. The controller 110 may control display of a GUI corresponding to various functions such as voice call, video call, data transmission, broadcasting reception, photographing, video view, application execution, and/or the like displayed through the display 190.

The display 190 may include at least one of a liquid crystal display, a thin-film transistor-liquid crystal display, an organic light-emitting display, a plasma display panel, a flexible display, a 3D display, an electrophoretic display, a vacuum fluorescent display, etc.

The user device 100 may include a plurality of the displays 190 depending on an implementation type thereof. In this case, the plurality of displays 190 may be disposed to face each other by using a hinge.

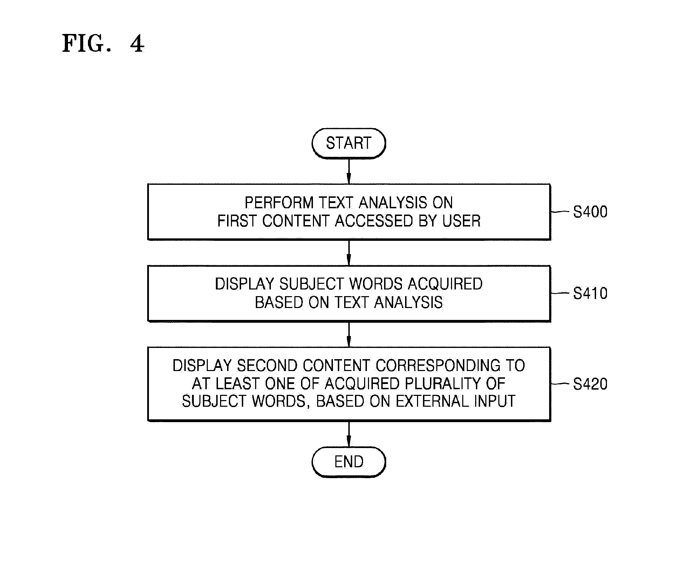

A method of summarizing, by the content providing apparatus, content will be described with reference to FIG. 4.

FIG. 4 is a flowchart of a method of displaying, by the user device 100, summarized content, according to an exemplary embodiment.

In operation S400, the user device 100 may perform a text analysis on first content accessed by a user.

The first content accessed by the user may be displayed by the user device 100. Here, the first content may be a webpage itself which is accessed through a browser, or may be text, a figure, a table, a photograph, a video, or the like included in the webpage. The text analysis may be performed on the text included in the webpage, but is not limited thereto. The text analysis may be performed on text included in the photograph, the video, or the like by using optical character recognition (OCR).

In order to perform the text analysis on the first content, garbage may be removed from the first content, punctuation may be adjusted, inflected words may be parsed or changed to a stem, base, or root form, and preprocessing for filtering stop-words may be performed on the first content.

A root may refer to the smallest meaningful part of a word, which is not further analysable, either in terms of derivational or inflectional morphology. The root may be part of word-form that remains when all inflectional and derivational affixes have been removed. A stem may refer to a morpheme to which an affix can be added, or a part of a word that is common to all its infected variants. A base may refer to a morpheme to which affixes of any kind can be added. Some root or stem may be deemed as a base. Stop-words may refer to extremely common words that do not contain important significance to be used in text mining, text analytics, information extraction, and search queries. The storage 175 may include a list of predetermined stops words, for example, articles, prepositions, helping verbs, and the like. These stop words may be filtered out from the first content to speed up the text analysis and save computing power.

By performing the text analysis on the first content, words included in text of the first content may be distinguished from each other, and thus, a subject word may be acquired from the first content.

In an exemplary embodiment, the text analysis may include a semantic analysis. The word frequency of words included in the text of the first content, word similarity between the words, word correlation between the words, and/or the like may be checked through the semantic analysis. A word, of high frequency among the words, or representing similar words may be acquired as a subject word.

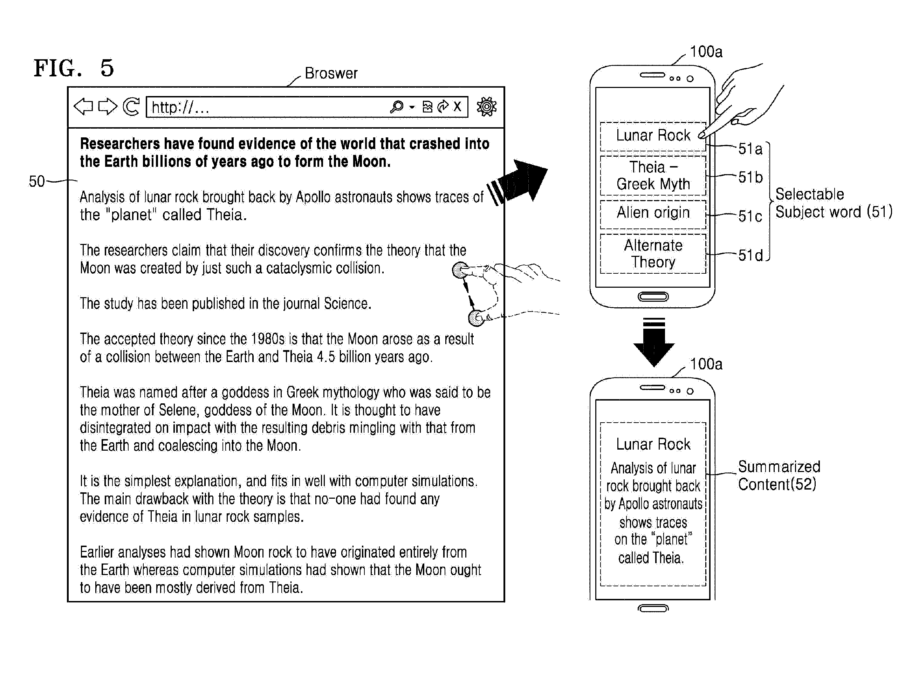

In an exemplary embodiment, the semantic analysis may be performed based on unsupervised extraction. The semantic analysis performed based on the unsupervised extraction will be described below with reference to FIG. 5.

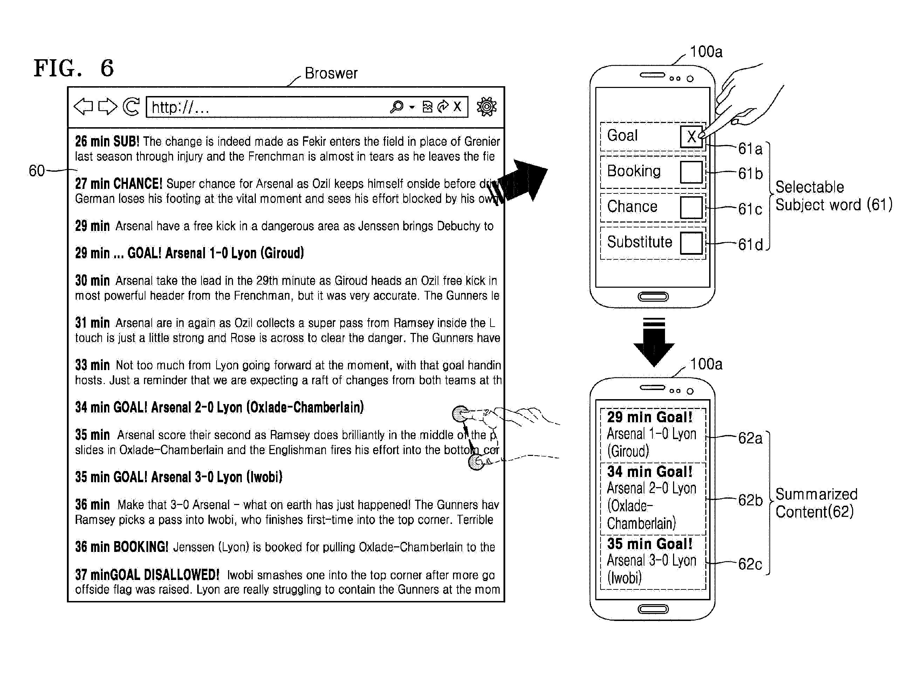

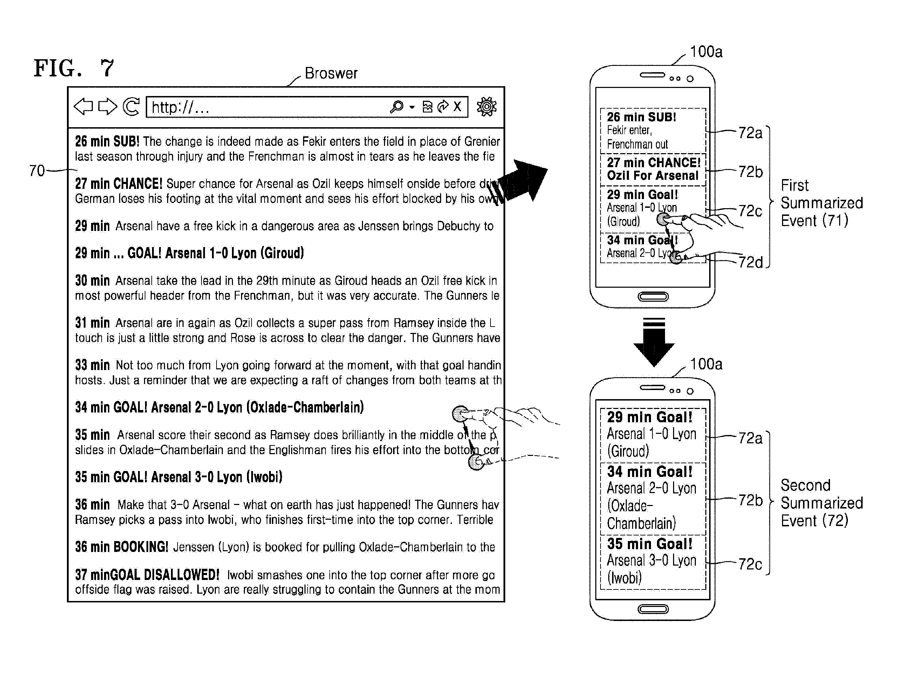

In an exemplary embodiment, the semantic analysis may be performed based on ontology. The semantic analysis performed based on ontology will be described below with reference to FIGS. 6 and 7.

In operation S410, the user device 100 may display a plurality of subject words which are acquired based on the text analysis in operation S400.

The subject words may be text included in the first content, but are not limited thereto. The subject words may include a topic, an event, a subject, a word vector, a token, context information, and/or the like which are associated with the first content.

In operation S420, the user device 100 may display second content corresponding to at least one of the acquired plurality of subject words based on an external input.

In an exemplary embodiment, the external input may be an input that selects the at least one subject word from among the plurality of subject words displayed through the display 190 of the user device 100. The display 190 may display the second content corresponding to the selected at least one subject word.

In an exemplary embodiment, the second content may be summarized content of the first content and may include a portion of the first content. The second content may include a portion of the content which is necessary for, is important for, or is preferred by a user. The portion of the content may be determined based on predetermined criteria reflecting necessity, significance, and preference in relation to the user. For example, a phrase, a sentence, a paragraph, a table, and/or the like which include each of the acquired plurality of subject words in the first content may be acquired as the second content.

In an exemplary embodiment, the at least one subject word corresponding to the second content may be selected based on a hierarchical relationship between the plurality of subject words. Here, the selected at least one subject word may be at the same level in the hierarchical relationship. Furthermore, a level in the hierarchical relationship may be determined based on an external input, and at least one subject word having the determined level may be selected.

According to an exemplary embodiment, a user may be provided with summarized content even without a separate operation (e.g., authoring) performed by a service provider or the user.

In an exemplary embodiment, the user device 100 may acquire a plurality of the second content corresponding to the plurality of subject words. Here, the plurality of second content may be acquired from the first content. Also, the plurality of second content may be previously acquired, before the second content corresponding to at least one of the plurality of subject words is displayed based on an external input. Therefore, when an external input that selects one subject word from among the plurality of subject words is received, the user device 100 may more quickly display the second content corresponding to the selected subject word.

FIG. 5 is a diagram for describing an example of summarizing content based on unsupervised extraction, according to an exemplary embodiment.

Referring to FIG. 5, first content 50 that is an online article may be displayed on a browser of the user device 100a. In FIG. 5, the user device 100a is illustrated as a smartphone, but is not limited thereto. In other exemplary embodiments, the user device 100 may be one of various electronic devices.

The user device 100a may perform text analysis on the first content 50 accessed by the user device 100a to acquire a plurality of subject words 51 and may display the acquired plurality of subject words 51.

As illustrated in FIG. 5, in an exemplary embodiment, an input that requests text analysis for the first content 50 may be a pinch-in input. That is, when the pinch-in input is received by the user device 100a displaying the first content 50, the user device 100a may perform the text analysis on the first content 50 to acquire the plurality of subject words 51 and may display the acquired plurality of subject words 51. Furthermore, when a pinch-out input is received by the user device 100a displaying the plurality of subject words 51, the first content 50 may be displayed over again. When the pinch-out input is received by the user device 100a which is displaying second content 52, the user device 100a may display the plurality of subject words 51 over again.

According to an exemplary embodiment, a user may be provided with summarized content through an intuitive user interface (UI).

In an exemplary embodiment, a semantic analysis may be performed based on unsupervised extraction. In detail, when the first content 50 is unsupervised content or non-standard content which is not defined based on ontology described below, the semantic analysis on the first content 50 may be performed based on the unsupervised extraction.

The plurality of subject words 51 may be acquired by performing the semantic analysis based on the unsupervised extraction. A latent semantic analysis (LSA) or a topic of the first content 50 may be used for performing the semantic analysis based on the unsupervised extraction. The latent semantic analysis may use a paragraph-term matrix that describes the frequency of terms that occur in each paragraph. In the paragraph-term matrix, rows may correspond to paragraphs included in the first content 50, and columns may correspond to terms included in each paragraph. Each entry in the matrix may have a value indicating the number of times that terms appear in its corresponding paragraph. As such, the matrix may show which paragraphs contain which terms and how many times they appear.

The plurality of subject words 51 may be extracted from the first content 50 by using singular value decomposition (SVD) in the LSA.

When the topic of the first content 51 is used, various topics may be extracted from the first content 50, and the extracted topics may function as the subject words 51. Furthermore, a phrase, a sentence, a paragraph, and/or the like corresponding to each of the subject words 51 in the first content 50 may be acquired as the second content, and a topical group including a plurality of phrases, sentences, or paragraphs may be acquired as second content by calculating saliency scores between the subject words 51 and a phrase, sentence, or paragraph of the first content 50.

The plurality of subject words 51 may be acquired by performing the semantic analysis on the first content 50 based on the unsupervised extraction, and the acquired plurality of subject words 51 may be displayed. Furthermore, when one subject word 51 a is selected from among the plurality of subject words 51 according to an external input, second content 52 corresponding to the selected one subject word 51 a may be displayed. That is, the selected subject words 51 a may function as a hyperlink of the second content 52.

According to an exemplary embodiment, a user may be provided with content which is summarized according to a subject word preferred by the user.

In an exemplary embodiment, the user device 100a may acquire a plurality of content pieces corresponding to the plurality of subject words 51. The plurality of content pieces may be previously acquired, and thus, when an external input that selects one subject word 51 a from among the plurality of subject words 51 is received so that the user device 100a may more quickly display second content 52 corresponding to the selected subject word 51 a.

FIG. 6 is a diagram for describing an example of summarizing content based on ontology, according to an exemplary embodiment.

Referring to FIG. 6, a user device 100a may perform a text analysis on first content 60 accessed by the user device 100a to acquire a plurality of subject words 61 and may display the acquired plurality of subject words 61. Also, as illustrated in FIG. 6, the first content 60 may be dynamic content or streaming content and may be updated in real time. The first content 60 may be displayed through an internet browser or an application program installed in the user device 100a.

In an exemplary embodiment, a semantic analysis may be performed based on ontology.

The ontology may define a hierarchical relationship between the subject words 61. Here, the ontology may function as an unifying infrastructure that integrates models, components, or data from a server associated with a content provider by using intelligent automated assistant technology. In a field of computer and information science, the ontology may provide structures for data and knowledge representation such as classes/types, relations, and attributes/properties and instantiation in instances. For example, the ontology may be used for building models of knowledge and data to tie together the various sources of models. The ontology may be a portion of a modeling framework for building models such as domain models and/or the like.

The ontology may include an actionable intent node and a property node. Here, the actionable intent node may be connected to one or more property nodes. For example, when the actionable intent node is "election", a property node connected to the actionable intent node may be "party", "election", "dis-election", "number of votes", "legislator", "district constituencies", or the like. Here, the property node may be an intermediate property node. In the above example, "number of votes" may function as the intermediate property node and may be connected to a lower property node such as "hour-based number of votes", "district-based number of votes", "voters age-based number of votes", or the like. The lower property node may be connected to the actionable intent node through the intermediate property node.

The ontology may be connected to other databases (DBs), and thus, the actionable intent node or the property node may be added to the ontology or may be removed or changed in the ontology. Also, a relationship between the actionable intent node and the property node may be changed in the ontology. A DB associated with the ontology may be stored in a storage unit of the user device 100a or stored in an external server.

Referring to FIG. 6, the first content 60 accessed by a user may be a commentary 60 on soccer. The commentary 60 may include comments on score, chance, change of players, foul, etc., in addition to comments on a whole soccer game.

In an exemplary embodiment, the semantic analysis may be performed on the first content 60 based on the ontology, and thus, the plurality of subject words 61 may be acquired based on the first content 60. As a result of a text analysis performed on the commentary 60, for example, the actionable intent node of the first content 60 may correspond to "soccer". Also, the actionable intent node "soccer" may be connected to property nodes such as goal, booking, change, change of players, and/or the like, and the subject words 61 acquired based on the first content 60 may correspond to relevant property nodes.

In FIG. 6, the subject words 61 corresponding to the property nodes such as goal, booking, change, change of players, and/or the like are illustrated, but are not limited thereto. In other exemplary embodiments, various property nodes may correspond to subject words. For example, when the user selects a subject word corresponding to a property node for a player, the user may receive comments associated with the player.

In an exemplary embodiment, the subject word 61 may correspond to a property node. Here, a name of the property node may not be text included in the first content 60, and may be similar in meaning to the text included in the first content 60, or may be common to the text included in the first content 60. Therefore, a phrase, a sentence, or a paragraph including a word having a meaning equal to, similar to, or common to an subject word of the first content 60, may be displayed as second content corresponding to the subject word. Also, the second content may include a plurality of phrases corresponding to one subject word.

In an exemplary embodiment, the second content 62 may be displayed to the user through a notification message while the first content 60 is being updated. The user device 100a may store an index of each of the subject words 61, or each of the subject words 61 as an index for second contents, and thus may display the second content 62, corresponding to a subject word 61 a selected by the user from the first content 60 which is updated, to the user through notification.

According to an exemplary embodiment, the user may be provided with content which is summarized according to a subject word preferred by the user.

In an exemplary embodiment, when the first content 60 includes streaming content or dynamic content and is unsupervised content or non-standard content not defined based on the ontology, semantic analysis may be performed on the first content 60 based on unsupervised extraction. For example, the first content 60 may be content which is updated through social network services (SNS).

As illustrated in FIG. 6, in an exemplary embodiment, an input that requests a text analysis on the first content 60 may be a pinch-in input. The controller 110 may determine a window size based on a change in a distance between two fingers caused by the pinch-in input and may buffer the first content 60 based on the determined window size.

Here, the determined window size may be used as a cut-off filter in an operation of extracting keywords from the buffered first content 60. Each of the keywords extracted from the buffered first content 60 may correspond to an eigen vector constituted by a combination of sub-keywords selected from prior associative words sets.

An eigen vector corresponding to the subject word 61 a selected by the user may match the eigen vectors of each of the keywords extracted from the buffered first content 60. As a result of the matching, keywords exceeding a matching threshold value may be identified in the buffered first content 60. The keywords identified in the buffered first content 60 may be displayed as second content.

According to an exemplary embodiment, even when content is unsupervised content or non-standard content which is not defined based on the ontology, summarized content is effectively provided to a user.

FIG. 7 illustrates an example of summarizing content based on ontology, according to another exemplary embodiment.

A user device 100a may perform a text analysis on first content 70 accessed in the user device 100a to acquire a plurality of subject words 61 based on the first content 70.

In an exemplary embodiment, a level in a hierarchical relationship between the acquired plurality of subject words may be determined based on ontology.

For example, when the actionable intent node is "election", a property node connected to the actionable intent node may be "party", "election", "dis-election", "number of votes", "legislator", "district constituencies", or the like. Here, the property node may be an intermediate property node. In the example, "number of votes" may function as the intermediate property node and may be connected to a lower property node such as "hour-based number of votes", "district-based number of votes", "voters' age-based number of votes", or the like. The lower property node may be connected to the actionable intent node through the intermediate property node. Here, a level of a subject word corresponding to the lower property node may be lower than a level of a subject word corresponding to the intermediate property node.

In an exemplary embodiment, a level of a subject word may be determined based on a preference of a user, importance to the user, and the frequency of a property node corresponding to the subject word.

Referring to FIG. 7, for example, the first content 70 accessed in the user device 100a may be a commentary 70 on soccer. The commentary 70 may include comments on score, chance, change of players, foul, etc., in addition to comments on a whole soccer game. Generally, users may have the most interest in scores in sports games. Therefore, a level of a score property node may be implemented higher than levels of other property nodes. The frequency of score may be the lowest, and thus, as the frequency of a property node is lower, the property node may be implemented to have the higher level.

In an exemplary embodiment, preferences of users may be determined based on which subject word is selected by the users from among a plurality of subject words through the user device 100a as in FIG. 6. That is, a subject word selected by a number of users may be determined as being high in preferences of users.

In an exemplary embodiment, as illustrated in FIG. 7, the user device 100a may determine levels of subject words in a hierarchical relationship based on a pinch-in input and may display second content 72 or 74 corresponding to the determined subject words. For example, the user device 100a may display the second content 72 or 74 corresponding to subject words having a level which becomes progressively higher in proportion to the number of times the pinch-in input is received. That is, when the user device 100a receives the pinch-in input once, the user device 100a may display the second content 72 corresponding to subject words having the lowest level, and as illustrated in FIG. 7, when the user device 100a receives the pinch-in input twice, the user device 100a may display the second content 74 corresponding to subject words having one-step higher level.

For example, a level in a hierarchical relationship may be determined based on a change in a distance between two fingers caused by the pinch-in input. That is, as two fingers are more closed, second content corresponding to a subject word having a higher level may be displayed.

In an exemplary embodiment, when the highest level is determined by the pinch-in input, a resistive feedback indicating no more higher level may be implemented to occur in the user device 100a. For example, the resistive feedback may be a graphic effect where a displayed screen bounces, vibration, or a sound output. Also, when the lowest level is determined by the pinch-in input, a resistive feedback indicating no more lower level may be implemented to occur in the user device 100a.

In the case in which the first content 70 is displayed through a browser or an application program associated with sport games, the user device 100a may determine people's names, verbs immediately following the names, numbers, and certain sport terminology as subject words, by a text analysis.

According to an exemplary embodiment, a user may be provided with content incrementally summarized from content updated in real time, through an intuitive UI.

Furthermore, even a user does not select a subject word, incrementally summarized content may be provided, and thus, convenience of the user increases.

FIG. 8A is a diagram illustrating a connection between a user device (e.g., terminal device) 100 and a server 300, according to an exemplary embodiment.

Referring to FIG. 8A, the user device 100 may be connected to the server 300 by wire or wirelessly over a network 200.

Wireless communication may include, for example, Wi-Fi, Bluetooth, Bluetooth low-energy (BLE), Zigbee, Wi-Fi Direct (WFD), ultra wideband (UWB), infrared data association (IrDA), near-field communication (NFC), and/or the like, but is not limited thereto.

Moreover, the user device 100 may be connected to the server 300 by wire through a connector.

In FIG. 8A, it is illustrated that the user device 100 is directly connected to the server 300 over a network. However, the user device 100 and the server 300 may through a sharer device, a router, or a wireless Internet network be connected to each other over the network.

Referring to FIG. 8A, content 80 accessed by a user may be displayed by a display of the user device 100. The content 80 created as web-based content may be displayed to the user through a browser. Here, the content 80 may be a webpage itself which is accessed through the browser, or may be text, a figure, a table, a photograph, a video, or the like included in the webpage.

The server 300 may receive a text analysis request for the content 80 accessed by the user over the network. Here, the text analysis request for the content 80 may include a uniform resource locator (URL) of the content 80.

The server 300 may perform a text analysis on the content 80 to provide summarized content 82 to the user device 100 over the network.

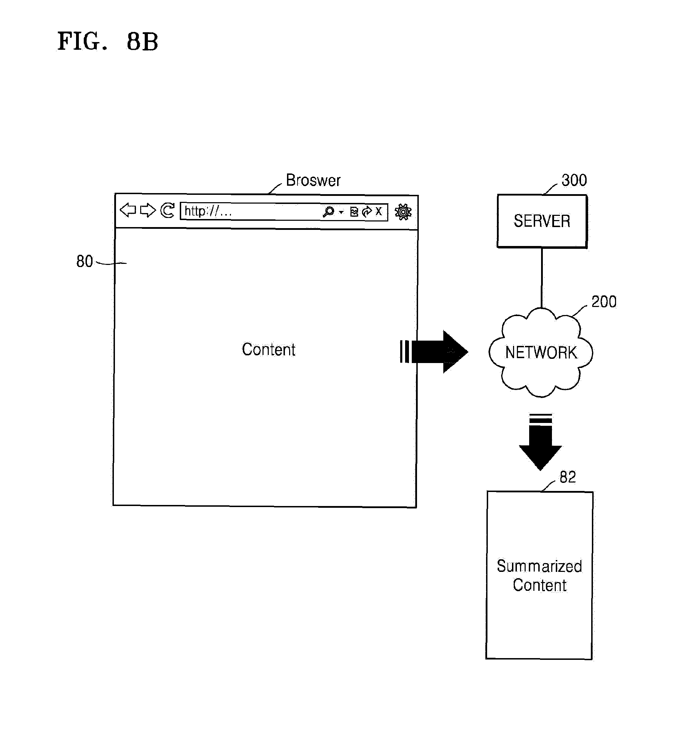

In FIG. 8B, for convenience, a content providing apparatus is illustrated as a second server 300 which intermediates between a user and a first server which directly provides the content 80, but is not limited thereto. In other exemplary embodiments, the content providing apparatus may be implemented as the user device 100, or the first server.

For example, when the content providing apparatus is implemented as the first server which directly provides the content 80, the first server may identify the content 80 accessed by the user and may perform the text analysis on the identified content 80 to provide the summarized content 82 to the user over the network.

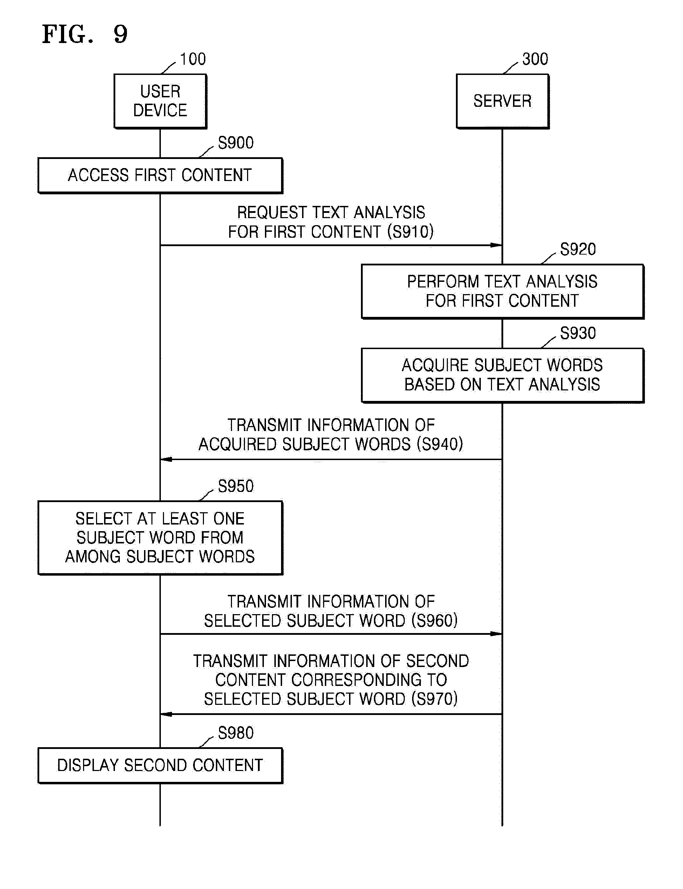

FIG. 9 is a flowchart of a method of providing, by a server 300, summarized content to a user device 100, according to an exemplary embodiment.

It is noted here that components and steps which have been described herein above with respect to FIG. 4 are not repeated in order to avoid a redundant description.

In operation S900, the user device 100 may access first content. In operation S910, the user device 100 may transmit a request text analysis for the first content to the server 300. Here, the first content may be dynamic content or streaming content and may be updated in real time.

In operation S920, the server 300 may perform a text analysis on the first content in response to the text analysis request which is received in operation S910. The text analysis may be a semantic analysis, which may be performed based on at least one of unsupervised extraction and ontology.

In operation S930, the server 300 may acquire a plurality of subject words based on the text analysis.

In an exemplary embodiment, the server 300 may acquire a plurality of content pieces corresponding to the plurality of subject words. The plurality of content pieces may be extracted from the first content. The server 300 may transmit information of the plurality of content pieces to the user device 100 so that second content corresponding to a subject word may be more quickly displayed.

In operation S940, the server 300 may transmit information of the acquired plurality of subject words to the user device 100.

In an exemplary embodiment, the server 300 may acquire a plurality of content pieces corresponding to a plurality of subject words, and may transmit information of the plurality of content pieces to the user device 100. The server 300 may transmit, to the user device 100, the information of the acquired plurality of subject words and information of the content pieces corresponding to the plurality of subject words together.

In operation S950, the user device 100 may select at least one subject word from among the plurality of subject words displayed based on an external input.

In an exemplary embodiment, the server 300 may acquire the plurality of content pieces corresponding to the plurality of subject words and may also transmit the information of the plurality of content pieces to the user device 100. Therefore, when an external input that selects at least one subject word from among the plurality of subject words is received, second content, extracted from the plurality of content pieces, corresponding to a subject word selected from the user device 100 is more quickly displayed.

In operation S960, the user device 100 may transmit information of the selected subject word to the server 300. The server 300 may store an index of the selected subject word.

In operation S970, the server 300 may transmit information of second content, corresponding to the selected subject word, to the user device 100.

In operation 980, the user device 100 may display the second content based on the information of the second content received from the server 300.

The information of the second content may include a notification message of the second content. While the first content is being updated, the server 300 may transmit the notification message of the second content, corresponding to the selected subject word, to the user device 100.

According to an exemplary embodiment, a user may be provided with summarized content even without a separate operation (e.g., authoring) performed by a service provider or the user.

Furthermore, a user may be provided with summarized content, and thus, traffic is reduced compared to a case where whole content is provided to the user.

In an exemplary embodiment, the server 300 may acquire a plurality of content pieces respectively corresponding to a plurality of subject words and may transmit information of the plurality of content pieces to the user device 100. When an input that selects at least one subject word from among the plurality of subject words is received, the user device 100 may refer to information of the plurality of content pieces and display second content, extracted from the content pieces corresponding to the selected subject word, thus operations S960 and S970 may be omitted and second content corresponding to a subject word selected by the user device 100 is more quickly displayed. In addition, operation S950 may be further omitted and the user device 100 may display the second content as provided by the server 300. In this case, the text analysis request transmitted from the user device 100 to the server 100 at operation S910 may include additional information input by the user, and the server 300 may perform the text analysis based on the user input and the first content.

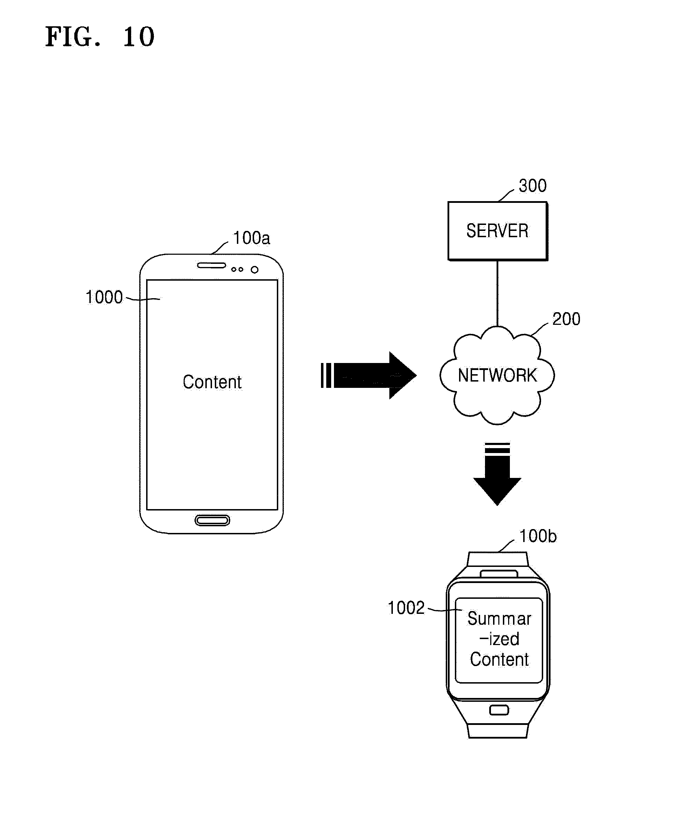

FIG. 10 is a diagram for describing an example of providing, by a server 300, second content summarized from first content accessed in a first device 100a to a second device 100b, according to an exemplary embodiment.

As illustrated in FIG. 10, the server 300 may perform a text analysis on first content 1000 accessed by the first device 100a to transmit second content 1002 obtained by summarizing the first content 1000, to the second device 100b. In this case, the second content 1002 may be provided to the second device 100b through a notification window or a notification message.

According to an exemplary embodiment, summarized content may be provided to different devices, and thus, convenience of the user increases.

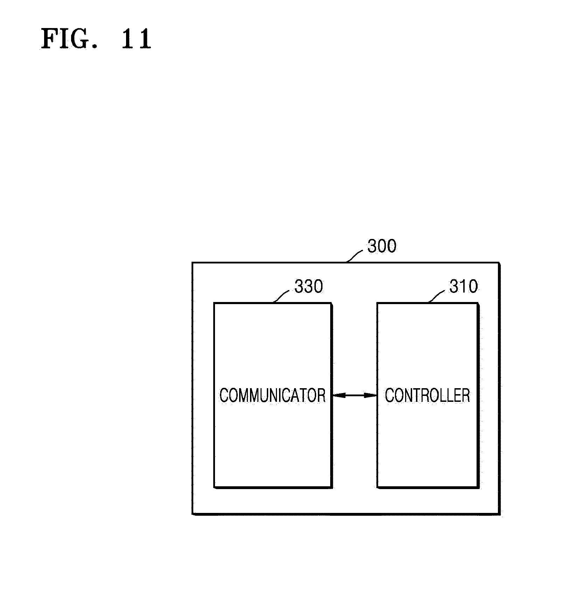

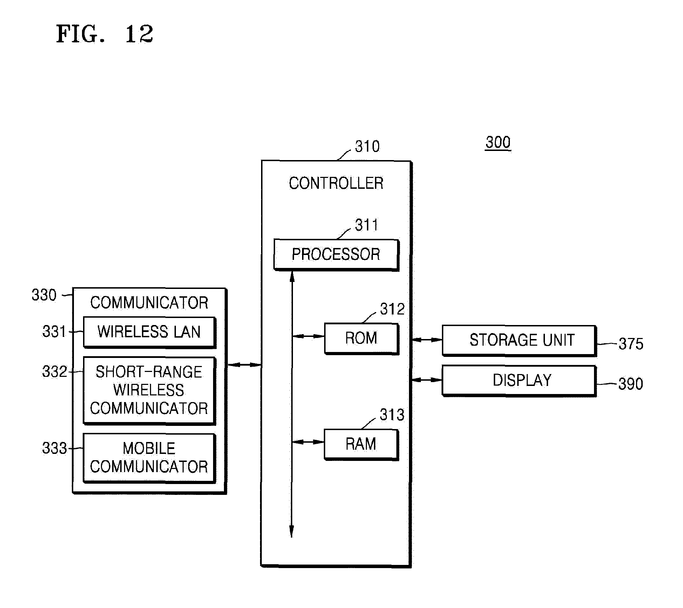

FIGS. 11 and 12 are block diagrams of a server 300 according to an exemplary embodiment.

Referring to FIG. 11, the server 300 may include a controller 310 and a communicator 330.

The controller 310 may perform functions of the server 300 by controlling overall operations of the server 300.

The server 300 may communicate with an external device through the communicator 330. The server 300 may receive, through the communicator 330, a text analysis request for first content accessed in by the external device. The text analysis request may be received from the external device in which the first content is accessed. Here, the first content may be dynamic content or streaming content and may be updated in real time.

The controller 310 may perform a text analysis on the first content accessed by the external device.

In an exemplary embodiment, the text analysis may include a semantic analysis. The word frequency of words included in the text of the first content, word similarity between the words, word correlation between the words, and/or the like may be checked through the semantic analysis. A word, of high frequency among the words, or representing similar words may be acquired as a subject word.

In an exemplary embodiment, the semantic analysis may be performed based on unsupervised extraction. In an exemplary embodiment, the semantic analysis may be performed based on ontology.

The communicator 330 may transmit, to the external device, information of a plurality of subject words acquired based on the text analysis. The external device may display the plurality of subject words, and an input that selects at least one subject word from among the plurality of subject words may be received in the external device. When the at least one subject word is selected in the external device, the external device may transmit information of the selected at least one subject word, to the server 300.

The communicator 330 may receive the information of the selected at least one subject word of the plurality of subject words, from the external device and may transmit information of second content corresponding to the selected at least one subject word, to the external device. Here, the information of the second content may be transmitted through a notification message. While the first content is being updated, the server 300 may transmit notification messages of the second content corresponding to the selected subject word, to the external device.

The server 300 may be implemented with less elements than the number of the elements illustrated in FIG. 11, or may be implemented with more elements than the number of the elements illustrated in FIG. 11. For example, as illustrated in FIG. 12, the server 300 according to an exemplary embodiment may further include a storage unit 375 and a display 390 in addition to the above-described controller 310 and communicator 390.

Hereinafter, the elements of the server 300 will be described in detail. It is noted that elements among the elements of the server 300, which perform the same functions as the elements of the above-described user device 100, are not repeated in order to avoid a redundant description.

The controller 310 may perform functions of the server 300 by controlling overall operations of the server 300. For example, the controller 310 may execute programs stored in the storage unit 375 to control the communicator 330, the storage unit 375, and the display 390.

The server 300 may communicate with an external device through the communicator 330.

The communicator 330 may include at least one of a wireless LAN 331, a short-range communicator 332, and a wired Ethernet 333. For example, the communicator 330 may include one of the wireless LAN 331, the short-range wireless communicator 332, and the wired Ethernet 333, or may include a combination thereof.

The storage unit 375 may store various types of data and a control program, which control the server 300, according to control by the controller 310. The storage unit 375 may store a signal or data that is inputted/outputted and corresponds to controlling of the communicator 330 and the display 390.

The display 390 may display information processed by the server 300. For example, the display 390 may display an execution screen of an OS , an execution screen of an application, and/or the like driven by the OS.

The display 390 may include at least one of a liquid crystal display, a thin-film transistor-liquid crystal display, an organic light-emitting display, a plasma display panel, a flexible display, a 3D display, an electrophoretic display, a vacuum fluorescent display, etc.

All references including publications, patent applications, and patents, cited herein, are hereby incorporated by reference to the same extent as if each reference were individually and specifically indicated to be incorporated by reference and were set forth in its entirety herein.

The exemplary embodiments may be represented using functional block components and various operations. Such functional blocks may be realized by any number of hardware and/or software components configured to perform specified functions. For example, the exemplary embodiments may employ various integrated circuit components, e.g., memory, processing elements, logic elements, look-up tables, and the like, which may carry out a variety of functions under control of at least one microprocessor or other control devices. As the elements of the exemplary embodiments are implemented using software programming or software elements, the exemplary embodiments may be implemented with any programming or scripting language such as C, C++, Java, assembler, or the like, including various algorithms that are any combination of data structures, processes, routines or other programming elements. Functional aspects may be realized as an algorithm executed by at least one processor. Furthermore, the exemplary embodiments concept may employ related techniques for electronics configuration, signal processing and/or data processing. The terms 'mechanism', 'element', 'means', 'configuration', etc. are used broadly and are not limited to mechanical or physical embodiments. These terms should be understood as including software routines in conjunction with processors, etc.

The particular implementations shown and described herein are exemplary embodiments and are not intended to otherwise limit the exemplary embodiments in any way. For the sake of brevity, related electronics, control systems, software development and other functional aspects of the systems may not be described in detail. Furthermore, the lines or connecting elements shown in the appended drawings are intended to represent exemplary functional relationships and/or physical or logical couplings between the various elements. It should be noted that many alternative or additional functional relationships, physical connections or logical connections may be present in a practical device. Moreover, no item or component is essential to the practice of the exemplary embodiments unless it is specifically described as "essential" or "critical"

The use of the terms "a", "an", and "the" and similar referents in the context of describing the exemplary embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the operations of all methods described herein can be performed in an appropriate order unless otherwise indicated herein or otherwise clearly contradicted by context. The exemplary embodiments are not limited by an order in which the operations are described herein. The use of any and all examples, or exemplary language (e.g., "such as") provided herein, is intended merely to clearly describe the exemplary embodiments and does not pose a limitation on the exemplary embodiments unless otherwise claimed. Numerous modifications and adaptations will be readily apparent to those skilled in this art without departing from the spirit and scope of the exemplary embodiments.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units of the above-described apparatuses and devices can include circuitry, a processor, a microprocessor, etc., and may execute a computer program stored in a computer-readable medium.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of displaying, by an electronic device, summarized content, the method comprising:
performing a text analysis on first content accessed by a user to acquire a plurality of subject words;
displaying the acquired plurality of subject words; and
displaying second content corresponding to at least one of the acquired plurality of subject words based on an external input,
wherein the second content is summarized content of the first content.

2. The method of claim 1, wherein the text analysis is a semantic analysis.

3. The method of claim 2, wherein
the first content comprises the plurality of subject words, and
the plurality of subject words are extracted from the first content by performing the semantic analysis based on unsupervised extraction, and are displayed.

4. The method of claim 2, wherein the at least one subject word is selected based on ontology that defines a hierarchical relationship between the plurality of subject words, and is at a same level in the hierarchical relationship.

5. The method of claim 4, wherein the semantic analysis is performed based on the ontology.

6. The method of claim 4, further comprising determining a level in the hierarchical relationship, based on the external input,
wherein the selected at least one subject word has the determined level.

7. The method of claim 6, wherein
the external input is a pinch-in input or a pinch-out input, and
the level is determined based on a extent of the pinch-in input or pinch-out input.

8. The method of claim 1, further comprising extracting, from the first content, a plurality of content pieces corresponding to the plurality of subject words,
wherein the displayed second content is extracted from among the plurality of content pieces.

9. The method of claim 1, wherein
the first content is web-based content, and
the second content is displayed through a notification message while the first content is being updated.

10. An electronic device for displaying summarized content, the electronic device comprising:
a controller configured to perform a text analysis on first content accessed by a user to acquire a plurality of subject words; and
a display configured to display the acquired plurality of subject words and display second content corresponding to at least one of the acquired plurality of subject words based on an external input,
wherein the second content is summarized content of the first content.

11. A method of providing summarized content to a terminal device by a server, the method comprising:
performing a text analysis on first content in response to a text analysis request for the first content accessed by the terminal device;
transmitting, to the terminal device, information of a plurality of subject words which are acquired based on the text analysis;
receiving, from the terminal device, information corresponding to at least one subject word of the plurality of subject words; and
transmitting information of second content corresponding to the at least one subject word to the terminal device,
wherein the second content is summarized content of the first content.

12. The method of claim 11, wherein the text analysis is a semantic analysis, the at least one subject word is selected based on ontology that defines a hierarchical relationship between the plurality of subject words, and is at a same level in the hierarchical relationship, and the semantic analysis is performed based on the ontology, and
further comprising receiving information about a level of the selected at least one subject word in the hierarchical relationship.

13. The method of claim 11, further comprising:
extracting, from the first content, a plurality of content pieces corresponding to the plurality of subject words; and
transmitting information of the plurality of content pieces to the terminal device.

14. The method of claim 11, wherein
the terminal device is a first terminal device, and
the transmitting the information of the second content comprises transmitting the information of the second content to a second terminal device.

15. A server for providing summarized content to a terminal device, the sever comprising:
a controller configured to perform a text analysis on first content in response to a text analysis request for the first content accessed in the terminal device; and
a communicator configured to transmit, to the terminal device, information of a plurality of subject words which are acquired based on the text analysis, receive, from the terminal device, information corresponding to at least one subject word of the plurality of subject words, and transmit information of second content, corresponding to the at least one subject word,
wherein the second content is summarized content of the first content.
